# EUROPÄISCHE PATENTSCHRIFT

(11) **EP 0 471 216 B1**
(45) Veröffentlichungstag und Bekanntmachung des Hinweises auf die Patenterteilung: **29.03.1995**
(21) Anmeldenummer: 91112360.2
(22) Anmeldetag: 23.07.1991
(51) Int. Cl.: H04M 3/30, H04M 3/28

(54) **Verfahren zur Leitungsanschlussprüfung vor einer Umschaltung von einer ausser Betrieb zu nehmenden Fernsprechvermittlungsstelle auf eine neu in Betrieb zu nehmende digitale Fernsprechvermittlungsstelle**
Method for testing the line connection before switching-over from a telephone exchange which is to be disabled, to a new digital exchange ready to be put into operation
Méthode pour tester la connexion de ligne avant une commutation d'un central téléphonique qui doit être mis hors service à un nouveau central téléphonique numérique qui doit être mis en service

(30) Priorität: 14.08.1990 DE 4025750
(43) Veröffentlichungstag der Anmeldung: 19.02.1992
(73) Patentinhaber: SIEMENS AKTIENGESELLSCHAFT, 80333 München (DE)
(72) Erfinder: Lechner, Robert, Dipl.-Ing., A-3100 St. Pölten (AT); Miller, Tom, Lake Mary Florida 32746 (US)

(56) Entgegenhaltungen:
- US-A- 3 752 940
- US-A- 4 454 388
- US-A- 4 544 809
- PATENT ABSTRACTS OF JAPAN, vol. 13, no. 445 (E-829)(3793)6. Oktober 1989 & JP-A-1 171 355 ( FUJITSU LTD )
- TELCOM REPORT Bd. 8, Nr. 6, November 1985,FRANKFURT DEUTSCHLAND Seiten 367 - 371; SCHLAG ET AL.: 'Automatische Messungder Betriebsgüte im Digitalvermittlungssystem EWSD'

## Beschreibung

Die Erfindung betrifft ein Verfahren zur Leitungsanschlußprüfung vor einer Umschaltung von einer außer Betrieb zu nehmenden Fernsprechvermittlungsstelle (alte Vermittlungsstelle) auf eine neu in Betrieb zu nehmende digitale Fernsprechvermittlungsstelle (neue Vermittlungsstelle), deren Leitungsanschlußschaltungen Prüfschaltkontakte enthalten, von denen einer zur Verbindung des über einen Hauptverteiler zugänglichen Leitungsanschlusses mit einem allen Leitungsanschlußschaltungen zumindest einer Gruppe von Leitungsanschlußschaltungen gemeinsamen Bus und ein weiterer zur Verbindung des Leitungsanschlusses mit den weiteren Bestandteilen der Leitungsanschlußschaltung dient, und die ferner Gruppen von Leitungsanschlußschaltungen gemeinsame Tongeneratoren zur Erzeugung in erster Linie vermittlungstechnischer Hörtöne und Codeempfänger für Wählzeichen und andere Signale enthält, die im Bedarfsfall den Leitungsanschlußschaltungen zugeordnet werden können, sowie den Leitungsanschlußschaltungen funktionsmäßig weitgehend entsprechende zwei Sonderanschlußschaltungen aufweist, über die wie von einem Endgerät aus Wählinformationen abgegeben werden können.

Bei einer Umschaltung wie der oben erwähnten werden an einem hierfür schon vorbereiteten Hauptverteiler durch Auftrennen von Verbindungsbrücken bzw. Anbringen neuer Verbindungsbrücken die Teilnehmeranschlußleitungen von der alten Vermittlungsstelle abgetrennt und an die neue Vermittlungsstelle angeschlossen. Bei einer solchen Umverdrahtung muß sichergestellt sein, daß den Endgeräten dieselbe Teilnehmernummer zugeordnet bleibt. Es muß ferner geprüft werden, ob auch bei der neuen Vermittlungsstelle die richtige Zuordnung der Datenbasis zu den einzelnen Teilnehmer anschlüssen gegeben ist.

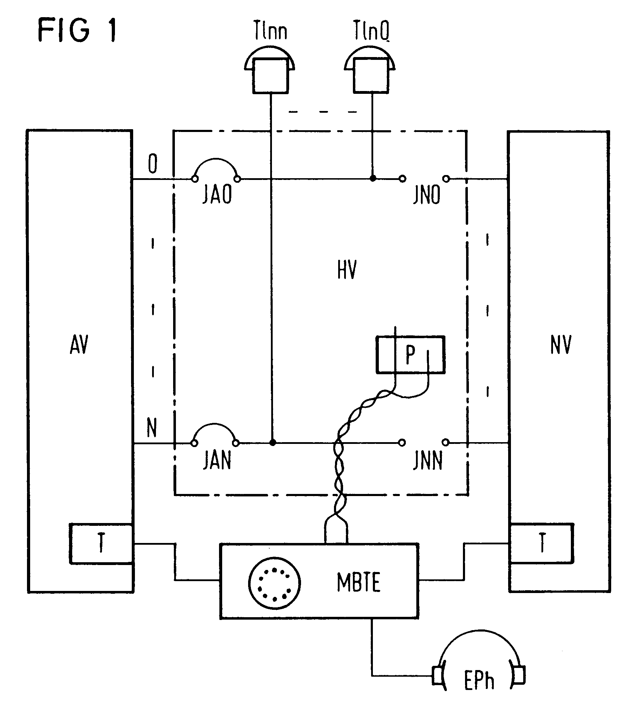

Ein bisher praktiziertes manuelles Verfahren zur Durchführung einer dementsprechenden Leitungsanschlußprüfung wird nachstehend unter Bezugnahme auf die Figur 1 näher erläutert.

Die Figur 1 zeigt eine alte Vermittlungsstelle AV und eine neue Vermittlungsstelle NV mit jeweils Teilnehmeranschlüssen 0 bis N, an die über einen Hauptverteiler HV Teilnehmerendgeräte Tln0 bis TlnN angeschlossen sind bzw. angeschlossen werden können. Solange eine Verbindung der Teilnehmerendgeräte bzw. deren Teilnehmeranschlußleitungen an die alte Vermittlungsstelle AV besteht, sind im Hauptverteiler HV Verbindungsbrücken IAO bis IAN gesteckt. Zur Verbindung der Teilnehmerendgeräte mit der neuen Vermittlungsstelle müssen Verbindungsbrücken INO bis INN gesteckt werden.

Die beiden Vermittlungsstellen weisen außer dem genannten Anschluß für Teilnehmeranschlußschaltungen jeweils einen Prüfanschluß T auf, über den durch Eingabe von Wählinformationen einer der angeschlossenen Teilnehmerendgeräte angewählt werden kann. An diese Prüfanschlüsse ist im vorliegenden Fall ein Prüfgerät MBTE angeschlossen. Mit Hilfe eines Prüfsteckers, der anstelle der Schaltbrücken IN0 bis INN gesteckt werden kann, lassen sich Eingänge des Prüfgerätes sowohl mit einem Leitungsanschluß der alten Vermittlungsstelle AV als auch mit einem Teilnehmeranschluß der neuen Vermittlungsstelle verbinden. Die Lautsprecher eines Kopfhörers EPh sind mit diesen Eingängen elektrisch verbunden.

Zur Leitungsanschlußprüfung wird nun manuell der Prüfstecker anstelle einer mit einem Anschluß der neuen Vermittlungsstelle NV verbindenden Schaltbrücke gesteckt und mit Hilfe des Prüfgerätes MBTE die dem Anschluß entsprechende Teilnehmernummer gewählt.

Sowohl über die alte als auch über die neue Vermittlungsstelle wird dadurch eine Verbindung von den Prüfanschlüssen T zu den betreffenden Leitungsanschlüssen hergestellt. Diese über die Prüfanschlüsse T erfolgende Herstellung von Verbindungen ist derart, daß bei dem betreffenden Teilnehmerendgerät ein Ruf unterbleibt. Das Prüfgerät sendet nun einen Prüfton an beide Vermittlungsstellen und über den Kopfhörer wird durch die Bedienungsperson geprüft, ob von den Teilnehmeranschlüssen beider Vermittlungsstellen her dieser Prüfton zu empfangen ist. Sofern dies nicht der Fall ist, muß eine Kontrolle der vorgenommenen Verdrahtung im Hauptverteiler bzw. der Zuordnung der Datenbasis zu dem betreffenden Leitungsanschluß vorgenommen werden.

Wenn alle Leitungsanschlüsse überprüft und als ordnungsgemäß befunden worden sind, werden die mit der alten Vermittlungsstelle AV verbindenden Schaltbrücken IAO bis IAN gezogen und die mit der neuen Vermittlungsstelle NV verbindenden Schaltbrücken INO bis INN gesteckt.

Diese Prüfprozedur erfordert einen beträchtlichen Zeitaufwand.

Die Aufgabe der Erfindung besteht daher darin, ein Verfahren zur Leitungsanschlußprüfung anzugeben, das automatisch abläuft und zu dessen Durchführung darüber hinaus nur geringe Hardwareänderungen an der neuen Vermittlungsstelle vorzunehmen sind.

Diese Aufgabe wird durch ein Verfahren der eingangs genannten Art gelöst, das die im Kennzeichen des Patentanspruchs 1 angegebenen Merkmale aufweist.

Demnach werden sowieso schon in den Teilnehmeranschlußschaltungen vorhandene Prüfanschaltkontakte, ein interner Prüfbus, ferner Sonderanschlüsse, über die aus der Vermittlungsstelle heraus wie von einem Teilnehmergerät aus direkt Teilnehmerendgeräte angewählt werden können, was in der Praxis Teilnehmerendgeräte einer Nebenstellenanlage sein werden, sowie Teilnehmeranschlußgruppen zugeordnete, ebenfalls sowieso vorhandene Tongeneratoren und Codeempfänger für Wählzeichen für die Durchführung der Prüfung ausgenutzt.

Eine weitere Ausgestaltung der Erfindung läuft auf die Einsparung von Prüfanschaltkontakten hinaus.

Nachstehend wird die Erfindung anhand eines Ausführungsbeispieles unter Bezugnahme auf die Zeichnung näher erläutert.

In der Zeichnung zeigen:
FIG 1 die schon erwähnte bekannte Anordnung zur Durchführung eines Verfahrens zur Leitungsanschlußprüfung,
FIG 2 eine Anordnung zur Durchführung des erfindungsgemäßen Verfahrens der Leitungsanschlußprüfung.

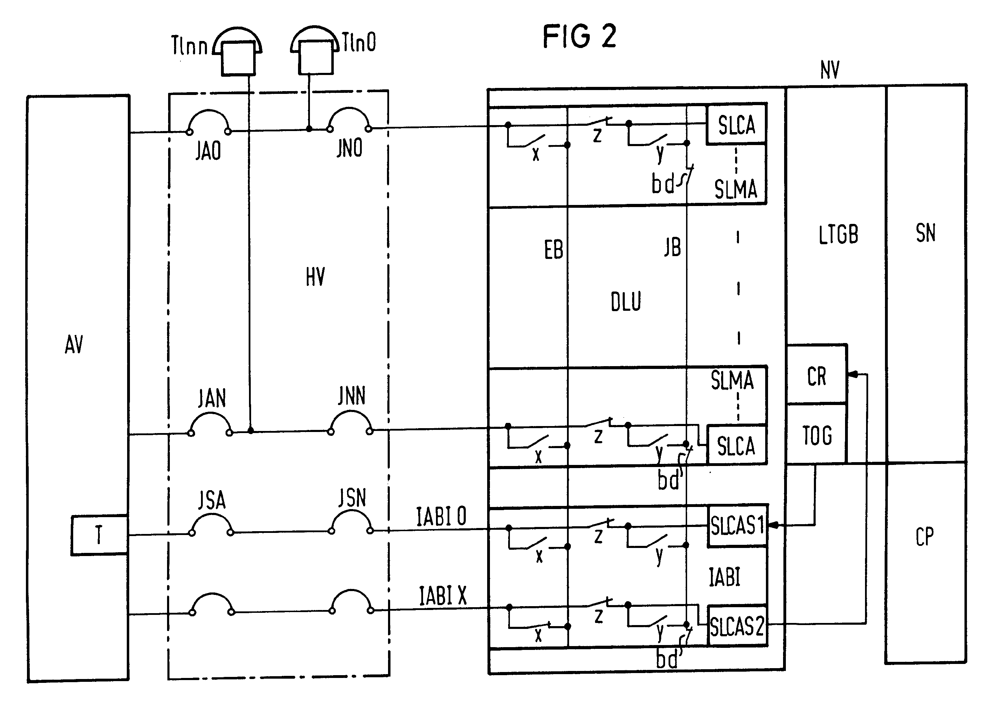

In der FIG 2 sind wie auch in FIG 1 eine außer Betrieb zu nehmende sogenannte alte Vermittlungsstelle AV, eine neu in Betrieb zu nehmende, sogenannte neue digitale Vermittlungsstelle NV sowie ein Hauptverteiler HV dargestellt, in dem durch Verbindungsbrücken IAO bis IAN bzw. INO bis INN Verbindungen der mit den Teilnehmerendgeräten TlnO bis Tln verbundenen Teilnehmeranschlußleitungen mit Leitungsanschlüssen der alten Vermittlungsstelle AV bzw. der neuen Vermittlungsstelle NV herstellbar sind.

Die wesentlichen Bestandteile der neuen Vermittlungsstelle NV sind Teilnehmerleitungseinheiten DLU, von denen hier eine dargestellt ist, und die auch von der Vermittlungsstelle abgesetzt angeordnet sein können, diesen Teilnehmerleitungseinheiten paarweise zugeordnete Anschlußgruppen LTGB, von denen ebenfalls nur eine dargestellt ist, ein Koppelnetz SN sowie ein Koordinationsprozessor CP.

Die Teilnehmerleitungseinheiten DLU sind ihrerseits im Hinblick auf den Leitungsanschluß gegliedert in Teilnehmeranschlußbaugruppen SLMA, die jeweils mehrere, beispielsweise 8 Teilnehmersätze SLCA umfassen, die die eigentlichen Schnittstellen zu den Teilnehmeranschlußleitungen darstellen.

Die FIG 2 zeigt ferner bei der neuen Vermittlungsstelle NV Kontakte x, mit deren Hilfe eine Verbindung der vom Hauptverteiler HV kommenden und zu den Teilnehmersätzen SLCA führenden Leitungen mit einem externen Bus EB hergestellt werden kann, ferner entsprechende Kontakte y, mit deren Hilfe eine Verbindung der genannten Leitungen mit einem internen Bus IB hergestellt werden kann, sowie leitungsanschlußseitig zwischen diesen Kontakten x und y liegende Kontakte z, mit deren Hilfe die Verbindung vom Leitungsanschluß zum Teilnehmersatz SLCA unterbrochen werden kann. Diese Kontakte dienen in erster Linie der Durchführung verschiedenster Prüfungen der Teilnehmersätze SLCA bzw. der Anschlußgruppen LTGB.

Die FIG 2 zeigt neben den erwähnten Teilnehmeranschlußbaugruppen SLMA eine Sonderanschlußbaugruppe IABI mit zwei Sonderanschlußsätzen SLCAS1 und SLCAS2, die funktionsmäßig weitgehend den Teilnehmeranschlußbaugruppen SLMA bzw. den Teilnehmersätzen SLCA entsprechen. Die erwähnten Sonderanschlußsätze SLCAS sind in derselben Weise wie die Teilnehmersätze SLCA über Kontakte z mit Leitungsanschlüssen bzw. über Kontakte x und y mit dem internen Bus IB bzw. dem externen Bus EB verbindbar. Es besteht außerdem eine Verbindung des Leitungsanschlusses des Sonderanschlußsatzes SLCAS1 über Brücken ISN und ISA des Hauptverteilers mit einer Prüfanschlußschaltung T der alten Vermittlungsstelle AV.

Bestandteil der vorerwähnten Anschlußgruppen LTGB sind unter anderem ein Tongenerator TOG, der in erster Linie der Erzeugung vermittlungstechnischer Hörtöne dient, der im Hinblick auf das erfindungsgemäße verfahren jedoch so ausgestattet ist, daß er auch einen Prüfton abzugeben vermag. Ferner gehört zu einer solchen Anschlußgruppe ein Codeempfänger CR, der in erster Linie der Auswertung von Mehrfrequenzen-Code-Wählzeichen dient, der im Hinblick auf das erfindungsgemäße Verfahren jedoch auch die Auswertung des erwähnten Prüftonsignals vornehmen kann. Beide der Einrichtungen TOG und CR sind im Bedarfsfall, nämlich im Zuge eines normalen Verbindungsaufbaus, den Teilnehmersätzen und im Zusammenhang mit der Durchführung des erfindungsgemäßen Verfahrens den Sonderanschlußsätzen SLAS1 bzw. SLAS2 zuteilbar.

Nachstehend wird das erfindungsgemäße Verfahren unter Bezugnahme auf die FIG 2 näher erläutert.

Zu Beginn der entsprechend dem erfindungsgemäßen Verfahren durchzuführenden Leitungsanschlußprüfung sind im Hauptverteiler HV sämtliche Verbindungsbrücken gesteckt, d. h. die Teilnehmerendgeräte Tln0 bis Tlnn sind sowohl an die alte Vermittlungsstelle AV als auch an die neue Vermittlungsstelle NV angeschlossen.

Beim ersten Sonderanschlußsatz SLCAS1 ist der Kontakt z geschlossen, womit eine Verbindung dieses Sonderanschlußsatzes mit dem Prüfanschluß T der alten Vermittlung AV besteht, die Kontakte x und y sind geöffnet. Beim zweiten Sonderanschlußsatz SLAS2 sind der Kontakt z und der Kontakt x geschlossen, womit eine Verbindung dieses Sonderanschlußsatzes mit dem externen Prüfbus EB besteht.

Durch die neue Vermittlungsstelle NV wird eine Zuordnung des erwähnten Tongenerators TOG zum ersten Sonderanschlußsatz SLCAS1 und eine Zuordnung des Codeempfängers CR zum zweiten Sonderanschluß SLCAS2 vorgenommen.

Beginnend mit dem ersten Leitungsanschluß wird nun durch die neue Vermittlungsstelle NV der diesem Leitungsanschluß, also demjenigen, an dem bei richtiger Zuordnung die Teilnehmeranschlußleitung des Teilnehmerendgerätes TlnO liegen soll, der Kontakt x geschlossen, womit dieser Leitungsanschluß ebenfalls am äußeren Prüfbus EB liegt.

Die neue Vermittlungsstelle NV veranlaßt nun die direkte Anwahl des Teilnehmers TlnO durch die alte Vermittlungsstelle, was dadurch geschieht, daß über den Sonderanschlußsatz SLCAS1 entsprechende Wahlzeichen an den Prüfanschluß T geliefert werden, wodurch eine Sprachverbindung von Tongenerator TOG über den Sonderanschluß SLCASl, den Prüfanschluß T, die die zu überprüfenden Verbindungsbrücken IAO und INO umfassende Leitungsverbindung, den äußeren Prüfbus EB, den Kontakt x und z, die dem Sonderanschlußsatz SLASD2 zugeordnet sind, zurück zum Codeempfänger CR aufgebaut ist.

Veranlaßt durch den Steuerprozessor dieser Anschlußgruppe LTGB sendet nun der Tongenerator TOG eine Prüftonfolge auf, die bei in richtiger Zuordnung hergestelltem Leitungsanschluß der alten und der neuen Vermittlungsstelle auf dem beschriebenen Sprechweg an den Codeempfänger CR gelangt, und dort auf Übereinstimmung geprüft wird. Wenn dort die Prüftonfolge erkannt wird, wiederholen sich die beschriebenen Vorgänge im Zusammenhang mit dem nachfolgenden Leitungsanschluß. Wird der Prüfton nicht erkannt, so erfolgt vor der Weiterschaltung auf die nächste Teilnehmeranschlußleitung bzw. den entsprechenden nächsten Leitungsanschluß durch das Zentralsteuerwerk CP der neuen Vermittlungsstelle eine Protokollierung, in der die räumliche Lagebezeichnung des Teilnehmersatzes SLCA bzw. des unter derselben Adresse erreichbaren Kontaktes x sowie die Fernsprechnummer festgehalten wird, die bei dem entsprechenden Prüfvorgang gewählt worden ist.

Nachdem auf diese Weise sämtliche Leitungsanschlüsse behandelt worden sind, wird durch Ziehen der Verbindungsbrücken IAO bis IAn, ISA die alte Vermittlungsstelle AV abgetrennt.

Bei der beschriebenen Anordnung sind je Teilnehmersatz drei Relais für die Bestätigung der Kontakte x, z und y vorhanden. Wie erläutert, wird im Zuge einer Leitungsanschlußprüfung jeweils der Kontakt x geschlossen, die Kontakte z und y dagegen sind geöffnet. Bei den Kontakten, die den Sonderanschlußsätzen zugeordnet sind, liegen die Verhältnisse, wie dargelegt, etwas anders.

Gemäß einer weiteren Ausgestaltung der Erfindung werden nun zur Einsparung von Relais bei den einzelnene Teilnehmersätzen SLCA die Kontakte z und y als Umschaltkontakt eines einzigen Relais realisiert, was im Hinblick auf Prüfungen der Teilnehmersätze, die unabhängig von der beschriebenen Leitungsanschlußprüfung durchzuführen sind, unproblematisch ist und im Zusammenhang mit der Leitungsanschlußprüfung jedoch problematisch ist, da dann immer bei einem zu prüfenden Leitungsanschluß, zwar wie erforderlich, der Kontakt z geöffnet sein kann, dabei jedoch auch eine Anschlußleitung des Teilnehmersatzes an dem internen Prüfbus IB über den Kontakt y liegt. Da eine Verbindung von Teilnehmersätzen, die unterschiedlichen Teilnehmeranschlußbaugruppen SLMA angehören, in diesem Zusammenhang unerwünscht ist, ist daher erfindungsgemäß pro Anschlußbaugruppe SLMA ein Relais mit dem Kontakt bd zur Abtrennung der Anschlußbaugruppe von dem internen Prüfbus IB vorgesehen, wie dies in FIG 2 angedeutet ist.

Da normalerweise bei der Teilnehmeranschlußbaugruppe SLMA acht Teilnehmersätze SLCA benötigt werden, bedeuten die zuletzt beschriebenen Maßnahmen eine Einsparung von 7 Relais je Teilnehmeranschlußbaugruppe SLMA.

## Patentansprüche

1. Verfahren zur Leitungsanschlußprüfung vor einer Umschaltung von einer außer Betrieb zu nehmenden Fernsprechvermittlungsstelle (alte Vermittlungsstelle) auf eine neu in Betrieb zu nehmende digitale Fernsprech-Vermittlungsstelle (neue Vermittlungsstelle), deren Leitungsanschlußschaltungen Prüfanschaltkontakte zugeordnet sind, von denen der erste (x) zur Verbindung des über einen Hauptverteiler (HV) zugänglichen Leitungsanschlusses mit einem allen Leitungsanschlußschaltungen (SLCA) zumindest einer Gruppe (SLMA) von Leitungsanschluß gemeinsamen Bus (EB) und ein zweiter (z) zur Verbindung des Leitungsanschlusses mit der eigentlichen Leitungsanschlußschaltung (SLCA) dient, und die ferner Gruppen von Leitungsanschlußschaltungen gemeinsame Tongeneratoren (TOG) zur Erzeugung in erster Linie vermittlungstechnischer Hörtöne und Codeempfänger (CR) für Wählzeichen und andere Signale enthält, die im Bedarfsfall den Leitungsanschlußschaltungen (SLCA) zugeordnet werden können, sowie den Leitungsanschlußschaltungen funktionsmäßig weitgehend entsprechende zwei Sonderanschlußschaltungen (SLCAS1, SLCAS2) aufweist, über die wie von einem Endgerät aus Wählinformationen abgegeben werden können,
**dadurch gekennzeichnet,**
daß bei im Hauptverteiler (HV) durch Verbindungsbrücken (IAO bis IAN; INO bis INN) hergestellten Verbindungen der Teilnehmeranschlußleitungen (TLnO bis TLnn) mit den Leitungsanschlüssen sowohl der alten (AV) als auch der neuen Vermittlungsstelle (NV), die einander entsprechen sollen, bei den Leitungsanschlußschaltungen (SLCA) der neuen Vermittlungsstelle (NV) nacheinander der erste Prüfanschaltkontakt (x) zur Herstellung einer Verbindung mit dem genannten Bus (EB) geschlossen und der zweite Prüfanschaltkontakt (Z) aufgetrennt wird, sowie bei durch eine den genannten Verbindungsbrücken entsprechende Verbindungsbrücke (ISN) im Hauptverteiler (HV) hergestellter Verbindung des einen Sonderanschlusses (SLCAS1) der neuen Vermittlungsstelle (NV) mit einem Prüfanschluß (T) der alten Vermittlungsstelle (AV) und Zuteilung des Tongenerators (TOG) an den einen Sonderanschluß (SLCAS1) und des Codeempfängers (CR) an den anderen Sonderanschluß (SLCAS2), wobei beim ersten Sonderanschluß (SLCAS1) der erste Prüfanschaltkontakt (x) geöffnet und der zweite Prüfanschaltkontakt (z) geschlossen ist und beim zweiten Sonderanschluß (SLCAS2) beide Prüfanschaltkontakte (x, z) geschlossen sind, von der neuen Vermittlungsstellen (NV) aus über den genannten Prüfanschluß (T) der alten Vermittlungsstelle das Endgerät (TlnO bis Tlnn) angewählt wird, dessen Teilnehmeranschlußleitung geprüft werden soll, woraufhin durch die alte Vermittlungsstelle (AV) zwischen dem einen Sonderanschluß (SLCAS1) der neuen Vermittlungsstelle (NV) und dem Endgerät (TlnO bis Tlnn) und damit auch dem betreffenden Teilnehmerleitungsanschluß der neuen Vermittlungsstelle (NV) eine Fernsprechverbindung hergestellt wird, über die durch den Tongenerator (TOG) ausgesendete Prüfsignale über die alte Vermittlungsstelle (AV), den genannten ersten Prüfanschaltekontakt (x) und den Bus (EB) in der neuen Vermittlungsstelle (NV), an deren weiteren Sonderanschluß (SLCAS2) und von da aus an den Codeempfänger (CR) gelangen und dort auf Übereinstimmung mit dem Muster des ausgesendeten Prüfsignals überwacht werden, woraufhin, sofern diese gegeben ist, unmittelbar eine Wiederholung der Vorgänge im Zusammenhang mit einem nachfolgenden Leitungsanschluß veranlaßt wird, bzw. sofern sie nicht gegeben ist, zuvor durch das Zentralsteuerwerk (CP) der neuen Vermittlungsstelle eine Fehlerprotokollierung bezüglich des betreffenden Leitungsanschlusses veranlaßt wird.

2. Verfahren nach Anspruch 1, **dadurch gekennzeichnet,**
daß bei Vorhandensein mehrerer Gruppen (SLMA) von Leitungsanschlußschaltungen (SLCA) und eines weiteren, von den Leitungsanschlußschaltungen (SLCA) her über jeweils einen dritten Prüfschaltkontakt (y) erreichbaren gemeinsamen Busses (IB) und bei Ausbildung des zweiten und dritten Prüfschaltkontaktes (z und y) als Umschaltkontakt eines einzigen Relais eine gruppenweise Anschaltung der Leitungsanschlußschaltungen (SLCA) an einen weiteren Bus (IB) durch Betätigung von Kontakten (bd) gruppenindividueller Relais erfolgt.

## Claims

1. Method of line termination testing before switching over from a telephone exchange to be taken out of service (old exchange) to a digital telephone exchange to be put into service for the first time (new exchange), the line termination circuits of which are assigned test connection contacts, of which the first (x) serves for connection of the line termination accessible via a main distributor (HV) to a bus (EB) shared by all the line termination circuits (SLCA) of at least one group (SLMA) of line termination circuits and a second (z) serves for connection of the line termination to the actual line termination circuit (SLCA), and which new exchange furthermore includes tone generators (TOG) shared by groups of line termination circuits for the generation primarily of switching call progress tones and code receivers (CR) for dialling signals and other signals, which can be assigned to the line termination circuits (SLCA) as and when required, and also has two special termination circuits (SLCAS1, SLCAS2) which functionally correspond to a great extent to the line termination circuits and via which dialling information can be provided, such as from a terminal device, characterized in that when connections of the subscriber termination lines (TLn0 to TLnn) to the line terminations both of the old exchange (AV) and of the new exchange (NV) which are intended to correspond to one another are established in the main distributor (HV) by connecting bridges (IA0 to IAN; IN0 to INN), at the line termination circuits (SLCA) of the new exchange (NV), one after the other, the first test connection contact (x) is closed for establishing a connection to the said bus (EB) and the second test connection contact (z) is opened, and when a connection of the one special termination (SLCAS1) of the new exchange (NV) to a test terminal (T) of the old exchange (AV) is established in the main distributor (HV) by a connecting bridge (ISN) corresponding to the said connecting bridges and when there is assignment of the tone generator (TOG) to the one special termination (SLCAS1) and of the code receiver (CR) to the other special termination (SLCAS2), in which case at the first special termination (SLCAS1) the first test connection contact (x) is open and the second test connection contact (z) is closed and at the second special termination (SLCAS2) both test connection contacts (x, z) are closed, the terminal device (Tln0 to Tlnn) whose subscriber termination line is to be tested is selected from the new exchange (NV) via the said test terminal (T) of the old exchange, whereupon a telephone connection is established by the old exchange (AV) between the one special termination (SLCAS1) of the new exchange (NV) and the terminal device (Tln0 to Tlnn) and consequently also the relevant subscriber line termination of the new exchange (NV), via which telephone connection test signals emitted by the tone generator (TOG) pass via the old exchange (AV), the said first test connection contact (x) and the bus (EB) in the new exchange (NV) to the latter's further special termination (SLCAS2) and from there to the code receiver (CR) and are monitored there for coincidence with the pattern of the emitted test signal, whereupon, if coincidence exists, a repetition of the operations is initiated immediately in conjunction with a following line termination or, if coincidence does not exist, first of all an error logging is initiated by the central processor (CP) of the new exchange with respect to the relevant line termination.

2. Method according to Claim 1, characterized in that when there are a plurality of groups (SLMA) of line termination circuits (SLCA) and a further common bus (IB), which can be reached from the line termination circuits (SLCA) via a third test connection contact (y) in each case, and when the second and third test connection contacts (z and y) are designed as a change-over contact of a single relay, a group-by-group connection of the line termination circuits (SLCA) to a further bus (IB) is performed by actuation of contacts (bd) of group-individual relays.

## Revendications

1. Procédé de test de la connexion de ligne avant une commutation d'un central téléphonique devant être mis hors service (ancien central) sur un central téléphonique numérique devant être nouvellement mis en service (nouveau central), aux circuits de raccordement de lignes duquel sont associés des contacts de raccordement de test, le premier contact (x) servant à relier la connexion de ligne, qui est accessible par l'intermédiaire d'un répartiteur principal (HV), à un bus (EB) commun à tous les circuits de raccordement de lignes (SLCA) d'au moins un groupe (SLMA) de circuits de raccordement de lignes, tandis qu'un second contact (z) sert à relier la connexion de ligne au circuit proprement dit de raccordement de ligne (SLCA), et qui contient en outre des générateurs de signaux acoustiques (TOG), qui sont communs à des groupes de circuits de raccordement de lignes et servent à produire en premier lieu des signaux acoustiques de commutation, et des récepteurs de code (CR) pour des signaux de sélection et d'autres signaux, qui peuvent être associés en cas de besoin aux circuits de raccordement de lignes (SLCA), et comporte deux circuits de raccordement particulier (SLCAS1, SLCAS2), qui correspondent dans une large mesure du point de vue fonctionnel aux circuits de raccordement de lignes, et au moyen desquels des informations de sélection peuvent être délivrées comme à partir d'un terminal,
caractérisé par le fait
que dans le cas de liaisons des lignes de raccordement d'abonnés (TLn0 à TLnn), établies dans le répartiteur principal (HV) par des ponts de liaison (IAO à IAN; IN0 à INN) avec les connexions de lignes aussi bien de l'ancien central (AV) que du nouveau central (NV), qui doivent se correspondre mutuellement, successivement on ferme le premier contact de raccordement de test (x) pour l'établissement d'une liaison avec ledit bus (EB) dans les circuits de raccordement de lignes (SLCA) du nouveau central (NV), et on ouvre le second contact de raccordement de test (Z), ainsi que, dans le cas d'une liaison, établie dans le répartiteur principal (HV) par un pont de liaison qui correspond auxdits ponts de liaison, d'une des connexions particulières (SLCAS1) du nouveau central (NV) avec une connexion de test (T) de l'ancien central (AV) et lors de l'affectation du générateur de signaux acoustiques (TOG) à une des connexions particulières (SLCAS1) et du récepteur de code (CR) à l'autre connexion particulière (SLCAS2), auquel cas, pour la première connexion particulière (SLCAS1), le premier contact de raccordement de test (x) est ouvert et le second contact de raccordement de test (z) est fermé et, pour la seconde connexion particulière (SLCAS2), les deux contacts de raccordement de test (x,z) sont fermés, il se produit, à partir du nouveau central (NV) et par l'intermédiaire de ladite connexion de test (T) de l'ancien central, une sélection du terminal (Tln0 à Tlnn), dont la ligne de raccordement d'abonné doit être testée, on établit ensuite par l'ancien central (AV) établit, entre une des connexions particulières (SLCAS1) du nouveau central (NV) et le terminal (Tln0 à Tlnn) et par conséquent également la connexion considérée de ligne d'abonné du nouveau central (NV), une liaison téléphonique, au moyen de laquelle des signaux de test, émis par le générateur de signaux acoustiques (TOG), parviennent par l'intermédiaire de l'ancien central (AV), dudit premier contact de raccordement de test (x) et du bus (EB), dans le nouveau central (NV), à l'autre connexion particulière (SLCAS2) de ce central et, à partir de cet endroit, au récepteur de code (CR), et on contrôle les signaux de test, en cet endroit, pour déterminer s'ils coïncident avec le modèle du signal de test émis, et ensuite dans la mesure où il y a coïncidence, on déclenche immédiatement une répétition des processus en liaison avec une connexion de ligne suivante, ou, dans la mesure où il n'y a pas coïncidence, on déclenche au préalable un relevé des erreurs en rapport avec la connexion de ligne considérée par l'unité de commande centrale (CP) du nouveau central.

2. Procédé suivant la revendication 1, caractérisé par le fait que dans le cas de la présence de plusieurs groupes (SLMA) de circuits de raccordement de lignes (SLCA) et d'un autre bus commun (IB) pouvant être atteint par l'intermédiaire respectivement d'un troisième contact de contrôle de test (y) à partir des circuits de raccordement de lignes (SLCA), et dans le cas où les second et troisième contacts de contrôle de test (z et y) sont réalisés sous la forme d'un contact de commutation d'un seul relais, on effectue un raccordement par groupes des circuits de raccordement de lignes (SLCA) à un autre bus (IB) par actionnement de contacts (bd) de relais prévus individuellement pour les groupes.
